# EUROPEAN PATENT APPLICATION

(11) **EP 2 164 046 A2**
(43) Date of publication of application: **17.03.2010**
(21) Application number: 09170167.2
(22) Date of filing: 14.09.2009
(51) Int. Cl.: G06T 15/40

(54) **Configurator process and system**

(30) Priority: 16.09.2008 US 211568
(71) Applicant: Speedshape, Inc., Birmingham, MI 48009 (US)
(72) Inventor: Vecore, James Calvin, Troy, MI 48083 (US); Tripp, Jared, Canton, MI 48187 (US); Risse, Michael, Troy, MI 48085 (US)
(74) Representative: Harmann, Bernd-Günther

(57) **Abstract**

A configurator that creates multi angle images of a product that can be configured with options, accessories, colors and the like in two-dimensional imagery, which does not require special software or hardware to view and interact with the configurator. The configurator automatically generates layer logic of how the product can be assembled for use in a configurator engine to manage the relationships of the two-dimensional art layers. The approach outlined here has moved the linking and logic to the generation phase of the layers thereby automatically generating the configuration logic file at rendering that can be used by a simple program to assemble the layers for a visual interface. Essentially, two-dimensional images are created in a layering scheme from three-dimensional models that can be assembled into any combination based on logic to support various configurations of products. The layering scheme approach prevents the need to render complete product image for each combination including breaking into most/least common factors in separate layers and assembling after the fact. Optimization reduces the number of combinations required for multi-angle images of a configured product. The imagery and logic can be updated without as much manual involvement.

## Description

This disclosure relates to a configurator that can automatically configure a product and its components and accessories. More specifically, the configurator and processes include layering and using two-dimensional (2d) images to show views of a product as part of a larger process.

Configurators automatically translate unique product requests into the documentation and information required to view requested product configurations. Web and computer-based product configurator software applications provide users with the ability to automate product configuration, pricing, ordering and selling options to meet the user's and/or manufacturer's needs. Web-based product configurators can be specifically designed for manufacturing companies that produce products, such as automobiles, that are highly configurable or are routinely customized to meet the unique needs of the manufacturer's customers. Product set-ups can be viewed with various features and options in multiple views.

Doing product configurators on the web can be difficult, but they can be very effective at selling products. A challenge includes being able to show the user what each product configuration (often there are hundreds of thousands of possible configurations) would look like from as many angles as possible while still providing high quality imagery and reaching the largest audience possible. In the past, one had to choose between two-dimensional image based configurators and real-time three-dimensional based configurators.

In the art, product configurators create images using three-dimensional (3d) technology to create accurate product images. Multiple product images, showing views from several perspectives, can be created giving users the ability to easily see the product in different configurations and views. Images are typically used by manufacturers that have products with numerous configurable permutations to show an exact replication of the product. Real time three-dimensional rendering can perform many of the viewing functions disclosed herein in a different way, but requires special software and sometimes hardware which limits the reachable audience of the configurator.

Three-dimensional configurators often provide the ability to show the product from any and all view points and even possibly all configurations, but image quality can be limited because of user hardware limitations. Additionally, three-dimensional configurators almost always require the users to download and install the three-dimensional viewing software, which can pose a security risk, time nuisance, or technological barrier to the user and their computer. Also, three-dimensional performance of the configurator is often dependent of specialized graphics hardware. In the case of real-time interactive computer graphics, usually a user is in control of what is about to be displayed on a computer screen. A user typically uses an input device to provide feedback to the system, and three-dimensional real time, such as for videos games, often requires special software or hardware, such as graphics processing units. For these reasons, real time three-dimensional configurators often have a much smaller reachable audience, and this reason alone is why many companies seek product configurations that avoid them.

Two-dimensional configurators use high quality imagery (either photography or hi-end computer generated images (CGI)) to show the product, but are severely limited by the number of viewpoints and often the number configurations due to cost and complexity. In the case where the images are photographs, it is extremely hard to show all the configurations of the products, as getting a hold of physical variations of all parts and colors is often not feasible. Computer generated assets can generate all possible configurations using unique images for each, but this generates a massive number of images for each and every individual configuration. However, two-dimensional configurators have a very large potential viewer base as they often do not use anything other than basic web browser capabilities.

2.5d configurators have become another option. These configurators try to make a compromise between two dimensions and three dimensions by using a frame stack of two-dimensional images to simulate a single three-dimensional camera movement around a vehicle. This approach allows for high quality of the images and more viewpoints than traditional two-dimensional configurators. However, showing many configurations becomes very hard in 2.5d. If a single image is used at each viewpoint, different versions of the image must be generated for all colors and configuration possibilities as well as for each frame. This makes the number assets so large that it is not a practical technique for anything but simple products.

Attempting to show all configurations in a traditional configurator would involve generating a unique image for each configuration. This leads to an impractical number of frames that need to be generated. Given the configuration data for a product, namely a vehicle in this example:
24 frames in the camera move
10 paint colors

| **States** | **Name** | **Alias** | **Colored** | **Details** |
|---|---|---|---|---|
| 2 | base trim level | bt | Y | Base1, Base2 |
| 7 | wheels | wh | N | 1x 16in, 4x 17in, 2x 18in |
| 3 | Ground Effects | ge | Y | Base, single ex, dual ex |
| 3 | Exhaust Tips | et | N | None, chrome tips |
| 2 | Spoilers | sp | Y | None, sports spoiler |
| 2 | Sunroofs | sr | N | None, tilt, clear |
| 2 | Antennas | an | N | basic, satellite radio |

One can calculate the number of combinations (without taking into account any exclusion information) like so:

| | |
|---|---|
| configurations (pre-color) = | 2 * 7 * 3 * 3 * 2 * 2 * 3 |
| configurations (pre-color) = | 1,512 |
| configurations (colored) = | 1,512 * 10 |
| configurations (colored) = | 15,120 |
| frames (colored) = | 15,120 * 24 |
| frames (colored) = | 362,880 |

There are 15,120 possible unique configurations of the vehicle (assuming a single paint color across all parts). Each configuration becomes a frame stack (a set of images that re-create the three-dimensional camera move when played sequentially similar to a flip book). This means that for a 24 frame configurator, the total number of frames that must be generated is 362,880 frames. The numbers get much higher if you allow each part that is colored to have its own color* (i.e. Green base car and red spoiler, etc):

| | |
|---|---|
| configs (colored) = | (2*10) * 7 * (3*10) * 3 * (2*10) * 2 * 3 |
| configs (colored) = | 1,512,000 |
| frames (colored) = | 1,512,000 * 24 |
| frames (colored) = | 36,288,000 |

Either of theses options is impractical both in terms of generating that number of frames as well as deploying a web server that could handle the volume. Furthermore, adding additional parts, especially colored ones, drastically increases the number of frames. Previous attempts at 2.5d configurators generally solve this problem by severely limiting the number of configurations they choose to show, reducing the number frames, or both to simplify the execution of the product configurator.

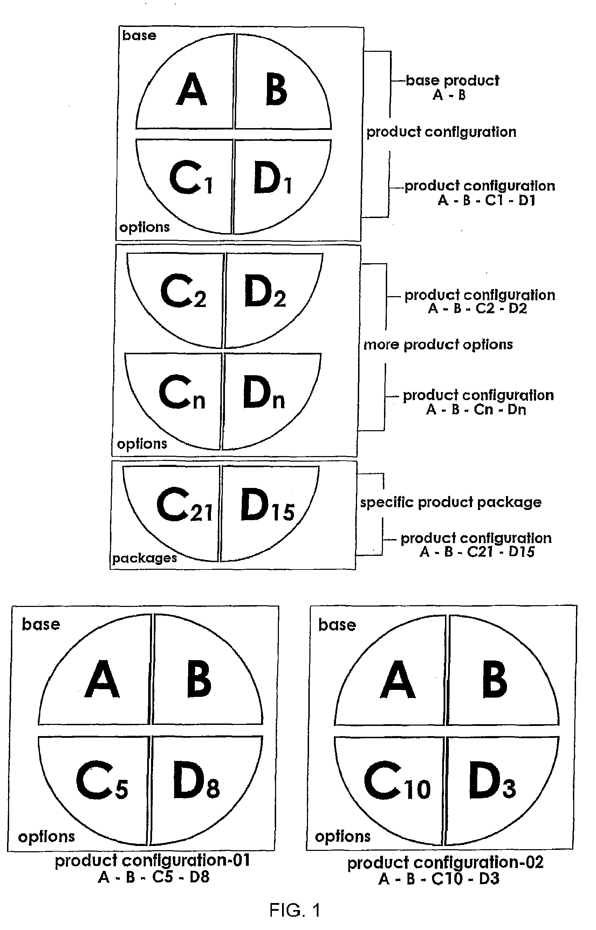

Figure 1 shows a simplified concept of a product configuration. A product is the sum of its parts. In this example, a single product configuration can be referred to as A-B-C-D. Elements A and B are considered the base product that is always required and cannot be substituted. Elements C and D are options that can be substituted with any variable of C or D. C1 through Cn and D1 through Dn can be interchanged without affecting AB. Furthermore, a manufacturer might define a combination of Cn and Dn as a package. This package combined with A and B could be defined as specific product AB WITH Package 1 that the manufacture offers at as a special product and pricing. Furthermore, there might be additional AB combinations, but we are looking at one consideration of a base model AB. In addition to Cn and Dn, there could be An and Bn.

Next, a "product" can be broadly defined as several components that are brought together in a single configuration. As the number of optional or unique components increase the possible combinations increase by orders of magnitude. For example, a consumer product like an automobile can have hundreds of options for interior and exterior. Options like colors, wheels, tires, body panels, and accessories can equate to millions of possible combinations.

A need exists for a simplified process to display products in all configurations without special software and complexities of three-dimensional configurators. Improvements to 2.5d configurators are disclosed in this specification.

A configurator is disclosed that creates multi angle images of a product that can be configured with options, accessories, colors and the like shown in two dimensions, which does not require special software or hardware to view and interact with the configurator. The configurator automatically generates layer logic of how the product can be assembled for use in a configurator engine to manage the relationships of the two-dimensional art layers. Essentially, two-dimensional images are created in a layering scheme from three-dimensional models that can be assembled into any combination based on logic to support various configurations of products. For example based on Figure 1, the logic would define a configuration as ABC21D15. The logic would define what layers to use for that configuration and what order to assemble the layers. Three-dimensional real time can create a single "assembled" two-dimensional image based on logic in real time from three-dimensional models. Creating a finished, complete product rendered image for every combination in real-time would require significantly more product images than using the optimized layering scheme approach by defining the common factors and options and assembling after the fact. Optimization reduces the number of frames required for multi-angle images of a configured product.

The present disclosure provides an approach to 2.5d configurators that solve issues related to generating all possible configurations without requiring distinct images for each. This configurator has very high image quality, a full camera move around the product, full and complete configurations, and the widest audience possible with limited software and hardware constraints. The technique involves a combination of dependent masking tracking over top of an optimized layer order. Using this technique with the presently disclosed sample configuration, 80 frame stacks can be used to generate 1,512,000 different configurations.

With a layering scheme, product configurators can create images of numerous combinations. The use of computer generated imagery (CGI) makes it possible to build a three-dimensional model for use to create two-dimensional images for print, interactive or broadcast of every possible combination for any consumer produce. To configure all possible combinations for the two-dimensional space, an image layering scheme is used to prevent the need to render a complete products image for every single possible combination. This process significantly improves the efficiency in generating every combination by only requiring subsections of a product to be represented by an image. The most common factor can be rendered on one layer while the variable factors can be rendered on separate layers.

Once all of the frames are rendered, they are assembled into an accurate representation of the product through various schemes. This is typically accomplished through a program taking into account the logic associated with how the pieces can fit together. This logic becomes increasing important as the number of frames rendered increase from several to several hundred thousand. For example, to be able to generate a single view of a product for all configurations would require hundreds of frames while a 360 degree view of the same product and options may require thousands of frames to represent all configurations.

The logic associated with how these product combinations can be configured is typically provided by a manufacture through an assembly guide or based on human knowledge of the product. Furthermore, several components can be combined into a unique package that further defines the logic.

The configurations of these images are typically presented to the user through a local interface to the layers via a stand alone computer or over the internet through a web browser or application. No special software or hardware is required. The system is preferably designed with Model View Controller (MVC) pattern to decouple data, logic and user interface. Ideally, the system is flexible as plug and play for various sized files and numerous applications, such as web, print and kiosk. The system will support motion media for all configurations.

The configurator can support new products without substantial changes in code. Updates to the configuration, in most cases, do not require a user to regenerate all images, and various aspects can be reused so the manufacture will benefit through the life of the product by repurposing the initial and subsequent set-ups and renders. This reduces cost and complexity.

The above-mentioned and other features of this disclosure and the manner of obtaining them will become more apparent, and the disclosure itself will be best understood by reference to the following descriptions of configurators taken in conjunction with the accompanying figures, which are given as non-limiting examples only, in which
Figure 1 shows a concept of a product configuration referred to as A-B-C-D;
Figure 2 shows a flow chart of a configurator process;
Figure 3 shows an example of three objects in space and depending on view determines what object occludes the other as a box, a sphere and a pyramid;
Figure 4 shows an example of three objects in the order of the pyramid, the sphere and the box;
Figure 5 shows camera angle as View 2 showing the example of Figure 3 in the order of the box, the sphere and the pyramid and View 1 shows the example of Figure 4 in the order of the pyramid, the sphere and the box;
Figure 6 shows Z-depth based on camera location to three-dimensional objects; and
Figure 7 shows an example of two-way occlusion where a cylinder is both behind and in front of a fork.

The exemplifications set out herein illustrate embodiments of the disclosure that are not to be construed as limiting the scope of the disclosure in any manner. Additional features of the present disclosure will become apparent to those skilled in the art upon consideration of the following detailed description of illustrative embodiments exemplifying the best mode of carrying out the disclosure as presently perceived.

While the present disclosure may be susceptible to embodiments in different forms, the drawings show, and herein described in detail, embodiments with the understanding that the present descriptions are to be considered exemplifications of the principles of the disclosure and are not intended to be exhaustive or to limit the disclosure to the details of construction and the arrangements of components set forth in the following description or illustrated in the figures.

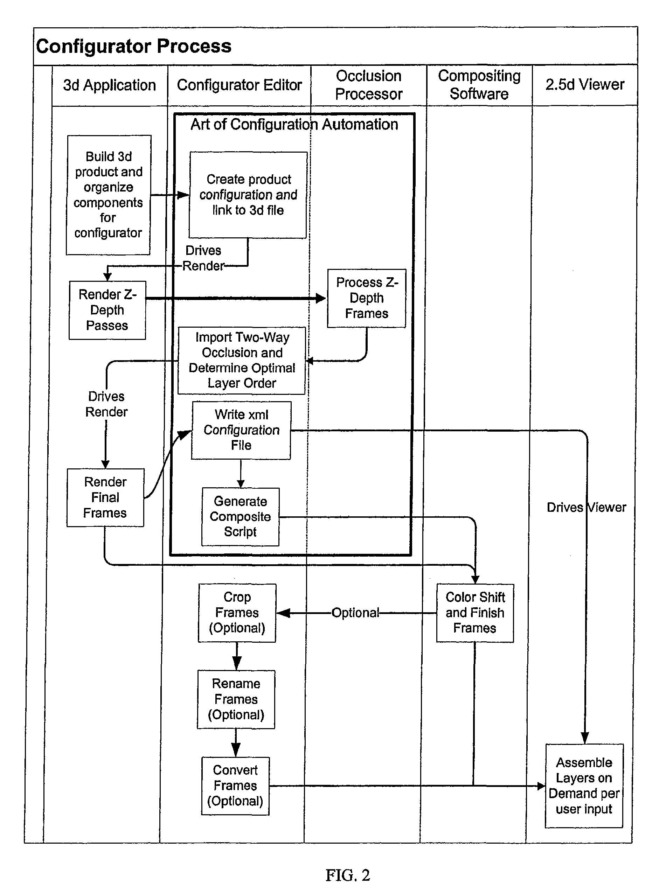

Figure 2 shows a flow chart of a configurator process as will be more fully detailed below. In a three-dimensional application, a three-dimensional product is built wherein data is collected and organized for product components for the configurator. Next, the configurator editor creates the product configuration and links to the three-dimensional file. The three-dimensional application renders Z-depth passes, and the occlusion processor processes Z-depth frames. The configurator editor imports two-way occlusion information and determines optimal layer order. The three-dimensional application renders final frames and the configuration file at the time the renders are written to disk. Then, the configurator editor generates the composite script. Compositing software finishes the frames and performs any necessary color shifting. The configurator editor can optionally crop frames, rename frames and convert frames. A 2.5 viewer as an example can assemble layers on demand per the user input.

Simplification of programming the product configuration process is disclosed to display two-dimensional imagery of the product through either print or a graphical user interface. This is accomplished through a solution to generate the configuration logic of a product at the time the layers of imagery are generated, thereby automatically linking the logic to the layers.

Generating huge number of frames or having an adequate web server to handle them is addressed with a new 2.5d configurator that uses component separation and layer ordering to reduce number of frames stacks needed while still maintaining the ability to produce all configurations including the ability to have each painted part in a unique color. By rendering out each component of the configuration as separate frame stacks, the individual pieces can then be composited together to produce the different product configurations without requiring a unique image for each configuration.

### Component Separation in Two Dimensions:

The first step to making layering work in a 2.5d configurator is to solve the problem for a single two-dimensional view. At first it might seem like the solution is as simple as rendering images of each component of the configuration then layering them on top of each other in the correct order (i.e. the spoiler layer would go on top of the trim level base). Such a solution only works for the simplest cases when dealing with three-dimensional objects.

For example, looking at a product from a ¾ front perspective of an automobile product, a portion of the front wheel/tire is hidden by the front fender. It can be said that the wheel well is "masking" the wheel/tire. Additionally, the wheel/tire also hides or masks a portion of the rear section of the front fender. Trying to layer separate images of the two objects will not produce the correct results in any order. Neither inserting images of wheel/tire on top of fender and vise versa works.

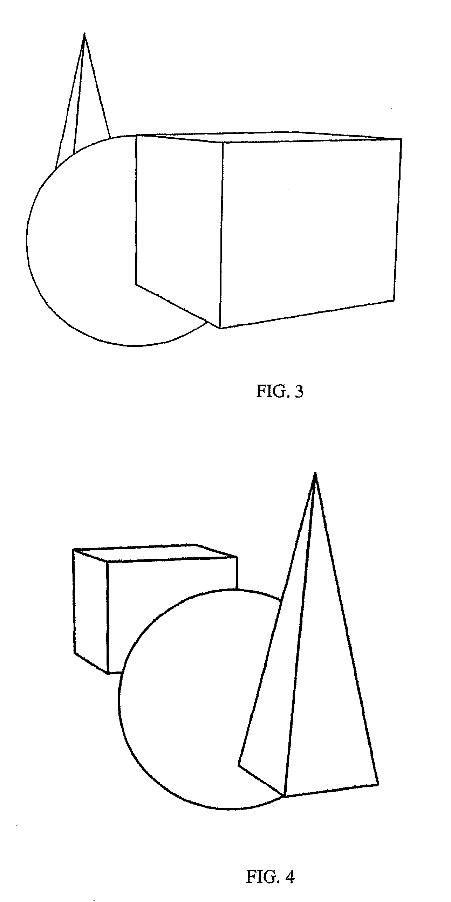

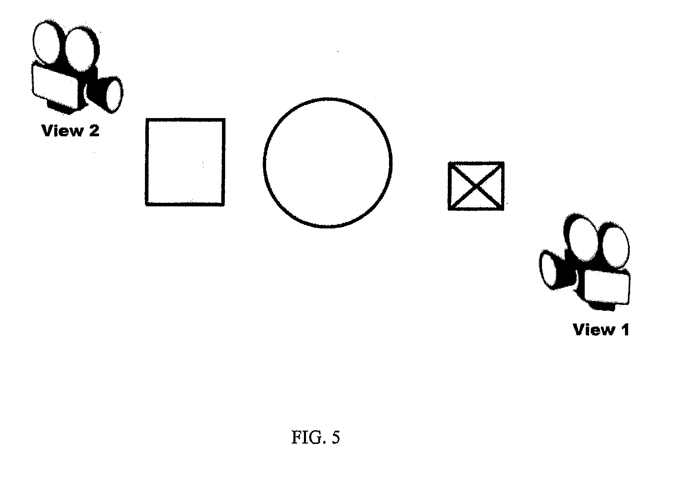

Figures 3 and 4 show examples of three objects (a box, a sphere and a pyramid) in space and depending on view determines what object occludes the other. Per Figure 5, the camera angle of View 2 shows the example of Figure 3 in the order of the box, the sphere and the pyramid; whereas View 1 shows the example of Figure 4 in the order of the pyramid, the sphere and the box.

In these cases, simple layering does not work due the interaction of the objects in three dimensions. When the objects are rendered together, the three-dimensional depth information, or Z depth, is used to determine at any given pixel which object should be considered on top of the other from the perspective of the camera. By rendering these objects separately, the depth interaction is lost and cannot be recovered.

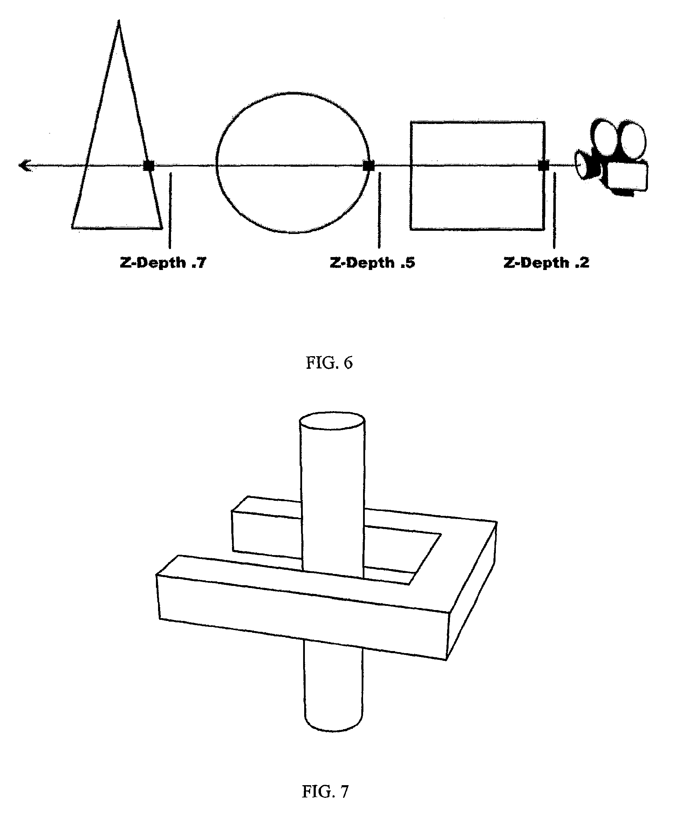

Figure 6 shows how Z depth is defined for a given camera's view of the three-dimensional scene. For each pixel of the 2-d rendered image that a given object would appear in, a depth value is calculated that represents the distance of the object from the camera's world space. From the camera's coordinate system, this depth value is the distance along the z-axis, so the depth value is called z-depth. The figure shows the z-depth values associated with each object for a single pixel. In this example, where the pixel projects onto the box, the depth value is .2. Where the pixel projects on to the sphere, the z-depth value is .5. Finally, where the pixel projects on to the pyramid, the depth value is .7. Object-pixel intersections that are closer to the camera have lower values than intersections that are farther away. Having these z-depth values for each object for every pixel will allow one to find out at any given pixel how the objects are spatially related with respect to the camera..

The presently disclosed solution to the problem is to render the objects together multiple times using masking. During the pass that will be used for the wheel/tire, the fender is only considered a mask object in the final output. This means that it does not contribute any pixels to the final image. Instead it only "cuts" the wheel/tire image where it is considered to be on top of it. The pass for the fender is done exactly the opposite; the wheel/tire becomes the mask of the fender. This has the effect of producing renderings of the wheel/tire and fender that can be layered on top of each other in either order and still produce the correct result.

This works great for simple interaction between two objects, but becomes more complicated when many objects are involved. For example, in the vehicle configuration example used above, there are three different ground effects and two base trim levels (the base trim levels contain the actual wheel well geometry that has been discussed above). In such an example, these components affect the masking of a given wheel/tire. This means that a given wheel/tire should be rendered out multiple times for each mask combination:
WheelX masked by base trim1 and ground effects1 (whX_maskedby_bt1_ge1) WheelX masked by base trim2 and ground effects1 (whX_maskedby_bt2_ge1) WheelX masked by base trim1 and ground effects2 (whX_maskedby_bt1_ge2) WheelX masked by base trim2 and ground effects2 (whX_maskedby_bt2_ge2) WheelX masked by base trim1 and ground effects3 (whX_maskedby_bt1_ge3) WheelX masked by base trim2 and ground effects3 (whX_maskedby_bt2_ge3)

Similarly, when the ground effects are rendered, they should be masked by the base trim and wheels:
Ground EffectX masked by base trim1 and wheel1 (geX_maskedby_bt1_wh1) Ground EffectX masked by base trim2 and wheel1 (geX_maskedby_bt2_wh1)
Ground EffectX masked by base trim1 and wheel1 (geX_maskedby_bt1_wh7) Ground EffectX masked by base trim2 and wheel1 (geX_maskedby_bt2_wh7)
This becomes even more complex when you add other features, such as exhaust tips.

The type of relationship displayed by ground effects, base trim, and wheel/tire will be called "two-way occlusion." Two-way occlusion happens when it is determined that at one pixel a component A is considered on top of component B, while at another pixel in the same image, it is found that component B is now on top of component A. Figure 7 shows an example of two-way occlusion where the cylinder is both behind and in front of the fork at the same time from this perspective. In such a case, the category of component A is said to be in two-way occlusion with the category of B. It only takes a single instance of two-way occlusion between single components for the parent categories to be marked or identified as two-way occluded.

For simple configurations like above, two-occlusion can be determined by an operator simply looking at the view with various components and making an educated guess about what component is occluding the other. It is also possible to determine this information programmatically, which is useful for more complex cases, which will be addressed below. Here is an example of two-way occlusion information for the example configuration provided earlier:

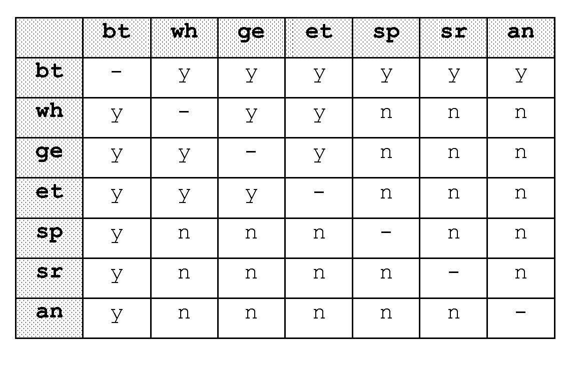

The number of renders needed to produce all configurations for this two-dimensional view using masking for all cases of two-way occlusion can be computed as follows:

| | | |
|---|---|---|
| bt renders | = 840 | = 2 * 7 * 3 * 2 * 10 (colors) |
| wh renders | = 84 | = 7 * 2 * 3 * 2 |
| ge renders | = 840 | = 3 * 2 * 3 * 2 * 10 (colors) |
| et renders | = 84 | = 2 * 2 * 7 * 3 |
| sp renders | = 40 | = 2 * 2 * 10 (colors) |
| sr renders | = 4 | = 2 * 2 |
| an renders | = 4 | = 2 * 2 |
| Total renders (colored) = 1,896 | | |

This is a significant decrease from the 15,120 renders that would be need if every combination was done (almost by an order of magnitude). However, this process supports the ability to have separate colors for all parts and should really be compared to the 1,512,000 renders it would take to do all color combinations.

### Optimizations

There are four optimizations that can be used to greatly reduce the total frames stacks needed to produce all configurations.

### Optimization 1: Combine renders

The first optimization can only be used with the assumption that it is not necessary to combine different color components. In some cases, this is a reasonable assumption, in other cases it is not. By grouping the renders of all categories connected by two-way occlusion and rendering them together, a large savings can be gained. In the example above, the bt,wh,ge, and et renders can all be done together in a single image. By doing this 1008 renders can be skipped:

| Using only optimization #1 | | |
|---|---|---|
| bt,wh,ge,et renders = 840 | | = 2 * 7 * 3 * 2 * 10 (colors) |
| sp renders | = 40 | = 2 * 2 * 10 (colors) |
| sr renders | = 4 | = 2 * 2 |
| an renders | = 4 | = 2 * 2 |
| Total renders (colored) = 888 | | |

Because of the single color assumption used in this optimization, it will not used in the rest of the examples.

### Optimization 2: Use only unique masks

The second optimization is to only count unique masks. The wheels/tire combinations of an automobile are a prime example where this method can save a large amount of renders. Vehicle wheels/tires generally only come in a set number of wheel sizes (16in, 17in, 18in etc) and overall tire diameters. The important thing about this observation is that silhouettes of the tires that are the same size are identical. This means that for masking purposes, they can be considered the same. Another case where this can apply is when a component has two different finishes, but the same geometry. For example, a front grill might come in aluminum and polished chrome. The geometry and therefore the mask it provides is the same so any object in two-way occlusion can effectively render its self out considering only one of grills or in the cases of wheel/tire only one for each tire size. Applying this optimization to the sample vehicle configuration yields the following number of renders (wheels/tires masking goes from 7 to 3 for the 3 sizes):

| Using only optimization #2 | | |
|---|---|---|
| bt renders | = 360 | = 2 * 3 * 3 * 2 * 10 (colors) |
| wh renders | = 84 | = 7 * 2 * 3 * 2 |
| ge renders | = 360 | = 3 * 2 * 3 * 2 * 10 (colors) |
| et renders | = 36 | = 2 * 2 * 3 * 3 |
| sp renders | = 40 | = 2 * 2 * 10 (colors) |
| sr renders | = 4 | = 2 * 2 |
| an renders | = 4 | = 2 * 2 |
| Total renders (colored) = 888 | | |

This makes a significant difference, cutting the number of renders by more than half.

### Optimization 3: Color shifting after renders

The third optimization involves deferring the coloring of the car paint until after the rendering process. Color shifting is done in a compositing program on the two-dimensional rendered images. A single version of the frames is rendered in a generic color, such as silver. These silver renderings are then shifted into the various colors the vehicle can be configured to have. This process is orders of magnitude faster than rendering out each color from the three-dimensional content creation application. This speed saving is further compounded when 2.5 configurators are looked at in the next section.

| Using optimizations #2 and #3: | | |
|---|---|---|
| bt renders | = 36 | = 2 * 3 * 3 * 2 |
| wh renders | = 84 | = 7 * 2 * 3 * 2 |
| ge renders | = 36 | = 3 * 2 * 3 * 2 |
| et renders | = 36 | = 2 * 2 * 3 * 3 |
| sp renders | = 4 | = 2 * 2 |
| sr renders | = 4 | = 2 * 2 |
| an renders | = 4 | = 2 * 2 |
| Total renders (no color*) = 204 | | |

| | | |
|---|---|---|
| *color can be added later in post-processing | | |

Using the above techniques and the three optimizations disclosed above, it is now practical do just about any two-dimensional configurator while producing every possible configuration. However, translating these configurators into 2.5d can still be very difficult for complex configurations.

### Component Separation in 2.5d

Component separation can be extended into 2.5d with some issues. Naturally, it would make sense to simply render out the layers as described for two-dimensional component separation across the frames of the camera move. Unfortunately, such a simple solution does not work. The problem comes back to two-way occlusion and the interaction of the components as they are rotated through the camera move. For example, suppose at first frame component A is completely on top of component B. Then at a later frame, in a 360 degree camera move, component B is now completely on top of component A. Much like the previous example of two-way occlusion in two dimensions, such a shift of depth order is considered a two-way occlusion. Two-way occlusion must not only be checked for in single frames, but also across the entire camera move for all frames.

User-based guessing of two-way occlusion in 2.5d is nearly impossible for all possibilities. Instead, a special application (called an occlusion processor) is disclosed that detects all cases of two-occlusion over a given camera move. In order for the application to work, it needs access to the depth information for every component at every pixel for every frame for the camera move with respect to the product as well as basic information about the configurations. The depth information is supplied as 32-bit floating point values in two-dimensional image at the same resolution as the final output. The configuration can be passed as an xml file. The occlusion processor takes both and computes a two-way occlusion matrix, which can then be used to drive the configurator masking process.

If the occlusion processor was run on the example configurator that has been used above, it would detect that in addition to the occlusion that would have been found in the two-dimensional configurator, there is also two-way occlusion between the sunroofs and the antennas:
2.5d Configurator Two-way Occlusion Chart 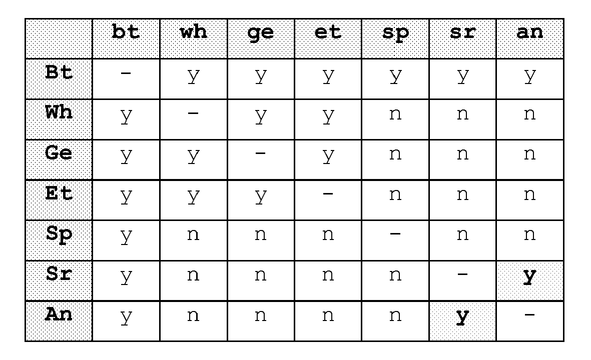
Two-way occlusion over the frame stack for sr and an is shown in bold as "y" in two of the four boxes in the lower right corner of the chart.

With a working two-way occlusion model and a way to compute it, one can extrapolate all the techniques describe for two-dimensional configurators in to 2.5d configurators. However, even with the three optimizations above combined, some product configurations are still so complex that they become unmanageable when translated into 2.5d. To deal with theses cases, a final optimization was developed.

### Optimization 4: Layer Ordering

The previous techniques produce renderings that can be assembled in any z-order to produce a given configuration. Attempts at using just layering failed due to the depth interaction of the components. However, a combination of layering along with masking can reduce the number of renders far more then any other technique or optimization.

The basic idea is to define a specific layering order for component categories. Using this specific layer order, the required masking can be reduced because component categories only have to be concerned with being masked by the categories that are below them in the layer order. Different layer orders produce different results. One or a group of layer orders will produce the least number of total frame stacks. This optimized ordering can easily be computed with brute force techniques.

### Layer order example 1:

2.5d Configurator

| Using optimizations #2, #3, and #4 (in layer order): | | |
|---|---|---|
| 7) sp frame stacks | = 4 | = 2 * 2 |
| 6) sr frame stacks | = 8 | = 2 * 2 * 2 |
| 5) an frame stacks | = 4 | = 2 * 2 |
| 4) wh frame stacks | = 84 | = 7 * 2 * 3 * 2 |
| 3) et frame stacks | = 12 | = 2 * 2 * 3 |
| 2) ge frame stacks | = 6 | = 3 * 2 |
| 1) bt frame stacks | = 2 | = 2 |
| Total frame stacks (no color) = 120 | | |
| Total rendered frames (no color) = 2880 = 120 * 24 | | |

### Layer order example 2:

2.5d Configurator

| Using optimizations #2, #3, and #4 (in layer order): | | |
|---|---|---|
| 7) sp frame stacks | = 4 | = 2 * 2 |
| 6) sr frame stacks | = 8 | = 2 * 2 * 2 |
| 5) an frame stacks | = 4 | = 2 * 2 |
| 4) ge frame stacks | = 36 | = 3 * 2 * 3 * 2 |
| 3) et frame stacks | = 12 | = 2 * 2 * 3 |
| 2) wh frame stacks | = 14 | = 7 * 2 |
| 1) bt frame stacks | = 2 | = 2 |
| Total frame stacks (no color) = 80 | | |
| Total rendered frames (no color) = 1920 = 80 * 24 | | |

These two examples show how layer ordering can affect the total number of renders. By moving the wheel/tire down from layer 4 to layer 2 and swapping ground effects and exhaust tips, 40 renders were cut.

In summary, by applying the last three optimizations, the total number of rendered frames is reduced from 36,288,000 to 1,920 (by not using optimization #1, we have maintained the ability to have each component be displayed in its own color, also the color shifting is not taken into account here because it is so fast compared to rendering the frames). This makes the process far more robust and able to handle even some of the most complex product configurators. Additionally, accommodating changes in the configurations becomes far more manageable than with brute force techniques.

### Process Overview

In a high-level process overview per the vehicle example, first digital models of a vehicle in all its trim levels and possible parts are created and organized. Then the configuration information obtained from the vehicle's manufacture is entered into a script, which attaches the data to the model. The data is broken down into components by category. Z-depth renders of each component over the camera move are generated and fed into the occlusion processor, which detects all cases of two-way occlusion. This data is then fed back into the script/model data. While preferred occlusion processors make manual work unnecessary, flat color renders can be produced and used to work out the two-way occlusion that produces the least number of final frame stacks. Then the final renders of the all vehicle's components can be done with a generic silver car paint applied where necessary. The frame stacks that have car paint in them are color shifted into all the colors that the vehicle will be available in. All frames could then be auto-cropped and renamed if needed. Finally, the assets are integrated into an application that allows the user to configure the vehicle and spin it through the camera move.

### Process Details

In summary, as detailed more fully below, a configurator process for a product with components may include the steps of:
1) collecting and organizing three-dimensional data for the product and its components, which may include tessellating the three-dimensional data from higher order parametric surfaces to triangle meshes;
2) setting up product configuration information; which may include steps:
   collecting detailed configuration information to specify which combinations of components are valid;
   entering and storing the detailed configuration information into a scene file using an interface;
      organizing components into component categories; rendering the final frame stacks; generating a compositing file with color options, and
   associating a three-dimensional mask with each piece of geometry of the components;
3) computing two-way occlusion of the components; which may include:
   detecting two-way occlusions through Z-depth processing; producing a matrix that details two-way occlusions between components and what frame triggered a detection of two-way occlusions;
   using an occlusion processor from a configurator script wherein the occlusion processor returns occlusion information and integrates results into a component configuration database;
4) determining optimal layer order; which may include:
   changing two-way occlusion options or changing layer order and reprocessing Z-depth frames
5) integrating frame stacks into an application for a user who can change configuration of the product with interaction;
6) dynamically loading frames on demand of the user.

### Configuration information/ CAD data collection/ Data prep

The configurator process begins with the collecting/creating of three-dimensional data for the product, such as a vehicle, its trim levels, and all the optional parts and accessories. This data can be CAD data that is tessellated into triangle mesh, three-dimensional scan data, hand modeled data, or any other type of three-dimensional data. The vehicle is assembled digitally into single three-dimensional scene file. Each trim level, accessory, and even the base vehicle are organized in the scene file by layers to allow them to be turned off and on quickly. The toggling of the various states of the layers is how each vehicle configuration can be reproduced. Detailed attribution information is also applied right down to matching material proprieties like grain patterns and colors.

### Setting up the vehicle configuration information

While the model data is being collected, detailed configuration information is also collected. This information specifies which part combinations are valid on the final vehicle from trim level packages to optional accessory and dependencies. This information is entered into the configurator editor application that was created specifically for this purpose. Parts are organized into component categories (i.e. "Wheel/tire," "Ground Effects", "Exhaust Tips"). Each component category has two or more components ("17 inch polished aluminum wheel", "LZX Ground Effects", "Dual Chrome Exhaust Tip"). The user specifies which three-dimensional object layers correspond to which vehicle components. All dependency information is also entered, which allows the system to determine which combinations are valid and which are not (i.e. "17 inch polished aluminum wheel" is not available in the "LX" trim level). Aliases can be given to component categories to make the output file names more readable ("Wheels" can become "wh"). Additionally, each piece of geometry should have a three-dimensional data mask associated with it.
Most often these masks are the geometry itself. However, special cases like the wheels/tires can be exploited to reduce the number frame stacks. All wheels/tires of the same size (i.e. 17 inch wheels) can effectively share the same mask data. This means that any parts that would be masked by wheels/tires then only need to be rendered with the masks for each wheel/tire size (2-3 wheel/tire sizes are common as standard equipment but hundreds are available through the aftermarket) instead of all wheels (4-10 wheels are common).

### Render Z-Depth passes and Compute Two-way Occlusion

Determining cases where components exhibit two-way occlusion is the next step in the process. In order to detect the cases of two-way occlusion, an application was developed that will process 32-bit Z-depth frame renders across the camera move and produce a matrix that details all of the cases where two-way occlusions occurs between components and what frame or frames triggered the detection. The program requires that each component has its Z-depth rendered for each frame in the camera move.

The configurator editor and application interface is setup to allow the user to submit a batch of render jobs that will produce all of the Z-depth renders required for the two-way occlusion processing. All layers can be sent at once, or individual layers can be sent one at a time.

Once the Z-depth frames have been finished, the occlusion processor can be kicked off from the configurator editor. The processor returns all occlusion information and integrates the results into the component configuration database.

An alternative to the Z-depth method is to determine the two-way occlusion matrix manually. One easy way to do that is to render out each component in a flat color at low quality render settings. These flat color renders can then imported into compositing software for manual two-way occlusion testing. Components can be layered on top of each other and the frame stacks can be cycled through to test which components affect each other throughout the camera move. This manual method is not preferred as it places responsibility on the operator, and the result of an incorrect occlusion decision can take a while to notice since the process of rendering and assembling the frames is highly pipelined. If the operator does make a mistake with the two-way occlusion matrix, this can force a re-render of the frames, which restarts the configurator process from the rendering step.

### Determining Optimal Layer Order

Determining the optimal layering order for the component categories is critical to keeping the number of frame stacks to a minimum. It is possible to determine optimal layer order programmatically with a brute force technique of checking the number of frame stacks for each possible layer order. This brute force method can take a long time when the number of layers gets beyond 7 or 8. Sometimes it is faster for the operator to make an educated guess at what could be a good layer order and have the configurator editor calculate the number of frame stacks for that order. The operator can then try another layer order and calculate the number of frames stacks for comparison to the original order. Usually an operator with a good understanding of the product's three-dimensional representation can make a good guess at what the layer order should be, and then narrow it down to testing a few different options. In scenarios where the operator cannot make these judgments about layer order, the brute force technique can be used if the configuration is simple or time is not a constraint. If brute force is not an option, any layer order that producers a reasonable number of frame stacks is viable option. There is technically no reason any given layer order cannot be used other than the fact that some layer order produces more frame stacks than others as demonstrated earlier in this document.

Rendering flat colors is an option that can be skipped, but in this variation, the user kicks off renders of each component in its flat color at very low quality render settings to keep the render times down (again using the configurator script). These flat color renders are then imported into a compositing software for layer order testing and final two-way occlusion testing (some times the occlusion processor is too precise and it will detect a case of two-way occlusion due to a small hole in mesh such as mount points for spoilers, in these cases, the operator should make the final call on what categories are in two way occlusion with each other). The order of the layers has a large effect on the total number of rendering needed to produce all valid configurator combinations so the operator should be careful in this step. Versions of the occlusion processor can be designed to work on a percentage basis so that things like small pin holes do no produce false positives. Additionally, once the occlusion processor can more accurately determine two-way occlusion, it will also be able to determine the optimal layer order. Once the use has determined the optimal layer stack order, this information can be entered back into the configurator script.

### Rendering final frame stacks

Using the configuration information that has been entered, the configurator script can now produce properly masked renders of the components. The renders are kicked off from the configuration editor either in batch or one at time.

### Naming breakdown sheet

A data sheet is generated from the configurator editor that breaks down each of the components that are in the configurator in greater detail than is needed in the scene file. This includes additional information for each component such as the part's real name, the mask id, whether the component is painted, the occlusion alias, layer order and more. Also, information about the paint color codes and names can be contained here. The manufacturer of the product should approve the breakdown sheet as part of the process of determining the final deliverables.

### Building the compositing file

The color shifting of the painted vehicle components into the various colors can be done in two-dimensional compositing software. A specialized plug-in can be used that recreates the car paint shader using the special render element buffers that contain data like surface normals, reflection, refractions, etc. This allows the artist to fine tune the combinations of each render element individually, as well and change the base color while in two dimensions. Generally, the base silver car paint is shifted into anywhere from 5 to 15 different colors depending on what colors the vehicle is available in. The compositing script/file is generated by the configuration editor so that all the renders produced are automatically read into the script and written out to the correct path. This step is used in automation since the process of setting up all the read and write nodes for the many frame stacks is a daunting and error prone task to do by hand. In some cases, it can make sense to create a single compositing file for all frame stacks, while in other cases it makes sense to break it out into separate scripts.

### Auto-cropping option

In an effort to reduce the file sizes, all images can be auto-cropped by component category in a way that makes them easily usable in the final web application. The auto cropping can be done on the renders using the kick-off application to submit the jobs. The cropping can be directly driven by the configuration file.

### Renaming assets option

Sometimes the names produced by earlier steps in the process are not appropriate for use in the final web application, especially when trying to integrate with external data services that provide configuration information based on part numbers or some other naming convention. A robust re-naming process has been integrated that allows for the re-naming of all assets into whatever format is required by web application. The re-naming step can again be driven by the configuration file. It can even accommodate cases when the name of the part changes based on the color of the vehicle (this happens when parts can come either primed for painting to limited number of colors, or they can come pre-painted).

### Final Web Application

The final portion of the configurator process involves integrating the frame stacks into an application that allows the user to "spin" the product, i.e. the vehicle, with mouse interaction or other input device. The application must dynamically load the frames on demand as the user changes the configuration of product based on the layer order and two way occlusion information. Such a user interface can be a 2.5d viewer that assembles layers on demand per the user input.

### The Logic

Once all of the layers are rendered, they are assembled into an accurate representation of the product through various schemes. This is typically accomplished through a program taking into account the logic associated with how the pieces can fit together. This logic becomes increasing important as the number of layers or frames increase from several to several hundred thousand.

The logic associated with how these product combinations can be assembled is typically provided by a manufacturer through an assembly guide or based on human knowledge of the product. Furthermore, there can be several components combined into a unique package that further define the logic.

The configuration of the product is typically presented to the user through a local interface to the layers and frames via a stand alone computer or over the internet through a web browser or application.

The ability to assemble all of the layers into a configured product image requires the logic to be associated with the various layers generated through the layering scheme. The accuracy of the logic linked to the layers becomes increasing important as the number of layers increase. This prevents inaccurate configurations or products that cannot be produced.

As the numbers of layers increase, the need to automate the assembly process becomes necessary to prevent human error. This has typically been handled through naming conventions of the layers that can be linked manually to the logic through a manufacturer's assembly documentation. Once this link is established an assembly program can tell the layers required to present the configuration to a user. Until now, the linking of the logic and naming of the frames has required manual human intervention, which consistently produced errors requiring additional resources to resolve. Furthermore, any change in product options or product design changes can require the configuration file to be reprogrammed further adding complexity and cost to updates.

The approach outlined here has moved the linking and logic to the generation phase of the layers thereby automatically generating the configuration logic file that can be used by a simple program to assemble the layers and frames in a visual interface. By generating the configuration file at the time of rendering, the need to manually link the product assembly logic to the images has been eliminated. Thereby eliminating a manual step in the configuration process.

By organizing the product three-dimensional files based on the manufacturer's assembly logic and using the layering scheme defined here, the product logic automatically defines how the three-dimensional files can be used to create product images of multiple configurations while reducing the overall images through the optimization process. At the time images are rendered, a configuration document is generated governing how the images can be assembled into an accurate representation of the configured product. The automatic generation of the configuration document is key to simplifying the overall process of viewing the configuration.

As design changes are made to the product over its lifecycle, the three-dimensional files are preferably kept up to date, which allows updated imagery to be generated with a new configuration file to support a new configuration engine further enhancing the long term benefit.

This disclosure has been described as having exemplary embodiments and is intended to cover any variations, uses, or adaptations using its general principles. It is envisioned that those skilled in the art may devise various modifications and equivalents without departing from the spirit and scope of the disclosure as recited in the following claims. Further, this disclosure is intended to cover such variations from the present disclosure as come within the known or customary practice within the art to which it pertains.

## Claims

1. A configurator for creating images of a product with configurable components including an image layering scheme with masking used in conjunction with an optimized layer order including an occlusion processor for detecting cases of two-way occlusion of the configurable components.

2. The configurator of claim 1 wherein the configurator generates logic of a product configuration at a time layers of images are generated thereby automatically linking the logic to the layers.

3. The configurator of any of claims 1 to 2 further including a viewer for assembling layers of images based on user input.

4. The configurator of any of claims 1 to 3 including an assembly process moving the linking and logic to the generation phase of the layers thereby automatically generating a configuration logic file at rendering that can be used by a simple program to assemble the layers for a visual interface.

5. The configurator of any of claims 1 to 4 wherein the image layering scheme prevents a need to render a complete product's image for every single combination wherein a most common factor is rendered on one layer while least common factors are rendered on separate layers.

6. A configurator for computer generated images having an image layering scheme to support configurations of products including:
a means for creating two-dimensional images in the layering scheme from three-dimensional models that can be assembled into numerous combinations based on logic;
a means for rendering Z-depth passes;
an occlusion processor for detecting cases of two-way occlusion from the Z-depth passes;
a means for determining optimal layer ordering;
an application for rendering final frames; and
a means for generating composite script.

7. The configurator of claim 6 wherein the image layering scheme prevents a need to render a complete product's image for every single combination wherein a most common factor is rendered on one layer while least common factors are rendered on separate layers.

8. A process of configuring a product with configurable components for multi angle images of the product in two dimensions with a scheme for layering images including the steps of:
layer ordering and masking,
using Z depth of components for optimization of layering, and
generating logic at time of a product configuration when layers of images are generated.

9. The process of claim 8 wherein generating logic at time of generating the product configuration file automatically links logic to layers of images, or, when layers of images are generated, the linking and logic automatically generate a configuration logic file that can be used by a simple program to assemble the layers for a visual interface.

10. The process of any of claims 8 to 9 including an additional step of organizing the product's three-dimensional files to define the most and least common factors wherein logic automatically defines how the three-dimensional files can create product images.

11. The process of any of claims 8 to 10 including a step of rendering images and concurrently generating a configuration document that governs how images can be assembled into an accurate representation of the product as configured.

12. A configurator process for a product with components including the steps of:
collecting and organizing three-dimensional data for the product and its components;
setting up product configuration information including a step of associating a three-dimensional mask with each piece of geometry of the components;
computing two-way occlusion of the components;
determining optimal layer order;
integrating frame stacks into a application for a user who can change configuration of the product with interaction; and
dynamically loading frames on demand of the user.

13. The configurator process of claim 12 wherein the step of collecting and organizing three-dimensional data includes tessellating the three-dimensional data from higher order parametric surfaces to triangle meshes.

14. The configurator process of any of claims 12 to 13 wherein the step of setting up product configuration information further includes:
collecting detailed configuration information to specify which combinations of components are valid;
entering and storing detailed configuration information into a scene file using an interface;
organizing components into component categories;
rendering final frame stacks; and
generating a compositing file.

15. The configurator process of any of claims 12 to 14 wherein the step of computing two-way occlusion includes:
detecting two-way occlusions through Z-depth processing; producing a matrix that details two-way occlusions between components and what frame triggered a detection of two-way occlusions; and
using an occlusion processor from a configurator script wherein the occlusion processor returns occlusion information and integrates results into a component configuration database.

16. The configurator process of any of claims 12 to 15 wherein the step of determining optimal layer order includes changing two-way occlusion options, or changing layer order and reprocessing Z-depth frames.

17. The configurator process of any of claims 12 to 16 wherein the step of building a compositing file includes a step of color shifting of colored components into the various colors with two-dimensional compositing software and processing component frame stacks that have colors.

18. The configurator process of any of claims 12 to 17 wherein the user can rotate the product showing different views with interaction on a web interface.
